# EUROPEAN PATENT SPECIFICATION

(11) **EP 2 387 741 B1**
(45) Date of publication and mention of the grant of the patent: **12.03.2014**
(21) Application number: 10701567.9
(22) Date of filing: 14.01.2010
(51) Int. Cl.: F22D 5/34, F24H 9/12, F16K 31/00, G05D 23/02

(54) **THERMOSTATIC ENERGY/WATER/TIME/CARBON SAVING DEVICE FOR INSTANT WATER HEATING DEVICES**
THERMOSTATISCH GERÄT ZUR SPARUNG ENERGIE / WASSER / ZEIT / KOHLENSTOFF FÜR WASSERHEIZVORRICHTUNG
DISPOSITIF À COMMANDE THERMOSTATIQUE PERMETTANT D'ÉCONOMISER DE L'ÉNERGIE/DE L'EAU/DU TEMPS/DU CARBONE POUR DES DISPOSITIFS DE CHAUFFAGE INSTANTANÉ DE L'EAU

(30) Priority: 17.01.2009 GB 0900866
(43) Date of publication of application: 23.11.2011
(73) Proprietor: Furlong Innovations Ltd., Wirral, Merseyside CH61 2XJ (GB)
(72) Inventor: FURLONG, David, Irby Merseyside CH61 2XJ (GB)
(74) Representative: Walker, Ross Thomson
(86) International application number: PCT/GB2010/050049
(87) International publication number: WO 2010/082054

(56) References cited:
- GB-A- 2 202 033
- GB-A- 2 311 119

## Description

The present invention relates to a thermostatic device, which is designed to accelerate the heating process in instant water heaters to reduce heating costs and save significant amounts of water and carbon emissions

In homes where a combination boiler is fitted, when a hot tap is used, there is always a delay while the boiler warms itself up to warm the cold water passing through it, to service the hot tap. The time delay in getting hot water from the tap depends on-
- The power of the heater
- The temperature of the incoming water
- The flow of the water.
- How warm is the water since the last time the appliance was used.

The object of the invention is to provide a thermostatic device which, when connected to the hot water outlet of an instant water heater/com bi-boiler, reduces the time for hot water to come out and provides an energy and water saving.

US 2004 0194835 discloses a valve according to the preamble of claim 1.

GB2202033 describes a thermostatic device which interrupts the flow of water out of the hot water outlet when its temperature exceeds a predetermined limit.

According to the present invention there is provided a valve according to claim 1.

The thermostatic device of the present invention is intended to be readily installed on the hot outlet pipe of an instant water heater or a shower heater. The device, being thermostatic, reduces the maximum flow from the combination boiler/shower heater to about a third of its capability. This causes the water to heat up more rapidly as it will be retained in contact with the heater element for longer. Once the water temperature has increased suffciently to the temperature set on the thermostatic device (around 35°C to 40°C, which is adjustable), the thermostatic characteristics of the device causes an internal valve to open and increase the flow rate to the maximum capability of the appliance. In tests, the device enabled the water temperature to increase to 40°C within 45 seconds, saving energy, water and time, whenever the tap or shower is turned on. Another benefit of this device is that it can be set to maintain a minimum outlet temperature, so that, for example, a bath could be filled just using the hot tap and, depending on the time of year, it will automatically adjust the flow to maintain the set outlet temperature even though the incoming temperature to the boiler may vary by 2 - 30 degrees.

According to the applicants own tests, the following carbon savings and water savings were typically found.

### CARBON SAVINGS

Firstly, "Boilers account for around 60% of the carbon dioxide emissions in a gas heated home" (Energy SavingTrust)

The following example illustrates carbon savings through having a valve according to the invention fitted on one domestic dwelling on a sample household of four. The formula is sourced from The Carbon Trust.

A 28kw combination boiler uses 30kw of gas per hour.

Average cost of gas is around £0.05 per kilo watt (at the time of writing).

Therefore, 30kw x 5 pence is £1.50 of gas used in one hour by the boiler.

Or 2.5 pence per minute, and 1.25 pence in 30 seconds.

A valve according to the invention could save the household 30 seconds wait time for hot tap water. In 30 seconds the boiler would have used 0.25kw (250 watts).

If our sample family of 4 used the tap 10 times a day each, that is 40 tap turns x 250 watts = 10 Kw of gas saved.

Multiply that by one year and you get 3, 650 Kw of gas saved @ £0.05 per Kw - £182.50 saved per year.

Using the C02 formula below from Carbon Trust

3,650 x 0.185 = 675.25 Kg or **0.675.25 tonnes of carbon per year saved**.

http://www.carbontrust.co.uk/resource/conversion factors/default.htm

Also from the Carbon Trust are the carbon emissions of water use as calculated by the UK water industry.

If large amounts of water are used, it makes sense to include the carbon emissions of water in carbon footprint calculations. A summary of the figures is given below:
Water supplied:
   To supply 1 mega litre of water produces 0.276 tonnes of CO2 emissions.

This works out at 0.276 kg CO2 per cubic metre of water supplied.

The carbon savings on water after fitting a valve according to the invention worked out at 0.003 tonnes per year p.a. per home.

### WATER SAVINGS

Assume 6 litres of water are saved each time the hot tap is used. Water costs approx 0.3p per litre and therefore the cost of 6 litres is around £0.02. Using the same scenario as above for a family of four using the tap 10 times a day each, the savings = £0.80 per day from a saving of 240 litres of water per day. Multiply this by one year to provide savings on the cost of water of around £292 per annum

Volume of water used- 87,600 litres (87.6 cubic metres) saving per year, per family of 4.

But there are many variations, e.g : type of boiler; whether the heating is on at the same time; when was the boiler was last used.

### Sample of various results comparing systems without or with a valve according to the invention fitted

| BOILER TYPE | SECONDS WAIT TIME WITH NO VALVE FITTED * | SECONDS WAIT TIME WITH VALVE FITTED* | Seconds Saved | LITRES WATER RUN WITH NO VALVE FITTED * | LITRES WATER RUN WITH VALVE FITTED * | Litres Saved |
|---|---|---|---|---|---|---|
| Worcester Green Star | 64 | 60 | 4 | 15.0 | 7.5 | 7.5 |
| The White Star | 65 | 31 | 34 | 10.0 | 4.6 | 5.4 |
| Valiant | 49 | 21 | 28 | 8.5 | 2.0 | 6.5 |
| Valiant | 46 | 40 | 6 | 9.0 | 4.2 | 4.8 |
| Worcester 24 | 42 | 38 | 4 | 9.0 | 5.0 | 4.0 |
| Worcester 28 | 46 | 34 | 12 | 7.4 | 3.0 | 4.4 |
| Ravenheat | 57 | 41 | 16 | 10.0 | 4.8 | 5.2 |
| Worcester 24 | 49 | 29 | 20 | 8.0 | 2.6 | 5.4 |
| Green Star | 90 | 45 | 45 | 14.0 | 4.5 | 9.5 |
| Volkera/Pro** | 75 | 35 | 40 | 14.0 | 2.5 | 11.5 |
| Worcester 24 | 49 | 26 | 23 | 7.5 | 2.0 | 5.5 |
| Bosch | 40 | 20 | 20 | 6.5 | 2.0 | 4.5 |

| | | | | | | |
|---|---|---|---|---|---|---|
| Average seconds saved: 21 Average litres salved : 6.18 *To 32 degrees **To 40 degrees. | | | | | | |

Further tests have been carried out on the valve (termed "CombiSave") by independent energy consultants, which carried out in a typical domestic environment, but in a controlled manner, the test regime being based around the following standard - BS EN 13203-2:2006 Gas-fired domestic appliances producing hot water - Appliances not exceeding 70 kW heat input and 300 L water storage capacity.

Within this standard there are regimes to describe what constitutes a 'type of delivery', when that delivery becomes useful, and how much energy must be delivered when the delivery has become useful. - See Table 1, below.

For a 'basin' type draw off the volume and energy were measured until the temperature for useful energy is required. From this point, the volume to deliver the required energy for this type of draw off was measured.

For a 'continuous flow' draw-off such as a bath, just the total volume drawn-off to deliver the required energy for this type of delivery was measured.

**Table 1: Trapping cycle from EN 13203-2:2006**

| | **Start (h.min)** | **Energy (kWh)** | **Type of delivery** | **~Tdesired (K), to be achleved during tapping** | **Min. ~T(K). = start of counting useful energy** |
|---|---|---|---|---|---|
| 1 | 07.00 | 0,105 | Small | | 15 |
| 2 | 07.05 | 11400 | -shower | | 30 |
| 3 | 07.30 | 0,105 | Small | | 15 |
| 4 | 07.45 | 0,105 | Small | | 15 |
| 5 | 08.05 | 3,605 | Bath | 30 | 0 |
| 6 | 08.25 | 0,105 | Small | | 15 |
| 7 | 08.30 | 0,105 | Small | | 15 |
| 8 | 08.45 | 0,105 | Small | | 15 |
| 9 | 09.00 | 0,105 | Small | | 15 |
| 10 | 09.30 | 0,105 | Small | | 15 |
| 11 | 10.30 | 0,105 | Floor cleaning | 30 | 0 |
| 12 | 11.30 | 0,105 | Small | | 15 |
| 13 | 11.45 | 0,105 | small | | 15 |
| 14 | 12.45 | 0,315 | Dish washing | 45 | 0 |
| 15 | 14.30 | 0,105 | Small | | 15 |
| 16 | 15.30 | 0,105 | Small | | 15 |
| 17 | 16.30 | 0,105 | Small | | 15 |
| 18 | 18.00 | 0,105 | Small | | 15 |
| 19 | 18.15 | 0,105 | Household cleaning | | 30 |
| 20 | 18.30 | 0,105 | Household cleaning | | 30 |
| 21 | 19,00 | 0,105 | Small | | 15 |
| 22 | 20.30 | 0,735 | Dish washing | 45 | 0 |
| 23 | 21.00 | 3,605 | Bath | 30 | 0 |
| 24 | 21.30 | 0,105 | Small | | 15 |
| Total | | 11,655 | | | |

Each type of draw-off was conducted in both DHW only, and DHW and central heating modes. In DHW mode, for each draw-off the boiler was returned to a base temperature by running mains water through the boiler with the boiler switched off.

To measure the volume and energy, a compact magnetic flowmeter in combination with rapid response thermocouples were used. The flowmeter provides instantaneous flow rates and the data logger was set to record every second.

Energy and volume values were then calculated from the recorded data.

The results of these tests are set out in the table below.

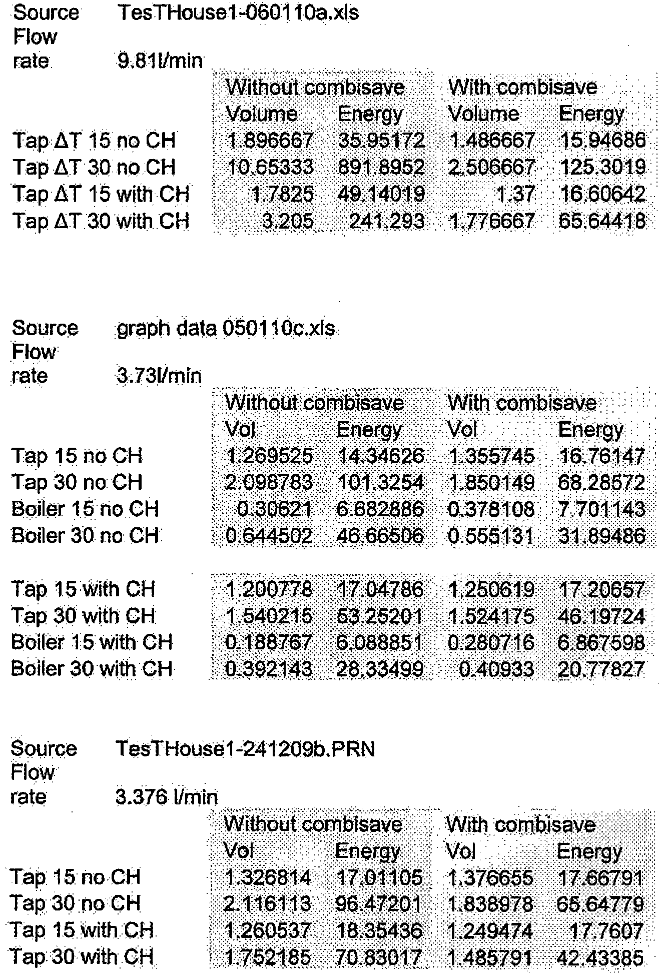

The 15 and 30 are the temperature increase of the water (not its temperature the increase) With central heating turned on or off.

The water flow rate is indicated in litres per minute

Volume is the water runoff before temperature increase is reached

Energy is the gas used before temperature increase is reached.

The valve of the invention can be manufactured with a 45 degree inlet pipe, which could be in a fixed position with a push fit type of pipe connector. The outlet of the valve could have a union type fitting, in which to attach an angled type of push fit connector which could also be angled at 45 degres. This would enable the valve by rotating the outlet through 180 degrees to be installed on a straight line of pipe or to cut out an elbow joint and fit with a 90 degree outlet.

The design of this is to cut down on the requirement of further fittings and also to make it a DIY fit, retailing it in a blister pack with a simple pipe cutting device being sold with it.

A smaller version of the valve can also be utilised for electric showers, where the flow rate is a lot less than a combination boiler. It would still be fitted with its variable bypass but is designed to be fitted inline by the customer. The inlet and outlet would be fitted with a standard male and female shower connector. The existing shower hose will need to be unscrewed from the heater unit and the valve fitted direct on to the heater unit with the hose being re-attached to the new valve. The valve could be finished in chrome, or have chrome-finish plastic cover, so it can be more aesthetically pleasing. This also could be a DIY fit.

The electric shower version will restrict the flow rate on initial start up and will fully open to let the water flow unrestricted once the water has reached its desired minimum temperature, thus saving water and electric by shortening the warm up time to enable a person to enter the shower earlier. Savings on electric, water and carbon are as follows: based on a family of four each showering once per day for 350 days a year would equate to a saving of around to 77 Kilo Watts of electricity, 1,400 litres of water this equates to a carbon saving of 41Kg.

The valve is also ideally suited to be fitted during the manufacture of of a combi-boiler. So as to give the end user a choice of running their hot water with or without the use of the valve, a three-port valve could be fitted ahead of the device so that the water could be diverted around in a bypass. This valve could be controlled by hand with a ¼ turn mechanism. This could help increase the sales of boilers for the manufactures as they would be able to claim higher fuel efficiency and lower carbon emissions.

The present invention will now be described by way of example with reference to the accompanying drawings, in which:
- Figure 1 shows a cross sectional view of the device of the invention which has a standard bypass hole drilled in its thermostatic piston assembly outer ring seal;
- Figure 2 shows a cross sectional view of the invention which has a variable cold flow grub screw;
- Figure 3 shows a cross sectional view of the invention including variable position fittings;
- Figure 4 shows a the valve of the invention installed for use with an electric shower; and
- Figure 5 shows a the valve of the invention as it might be installed in a combi-boiler.

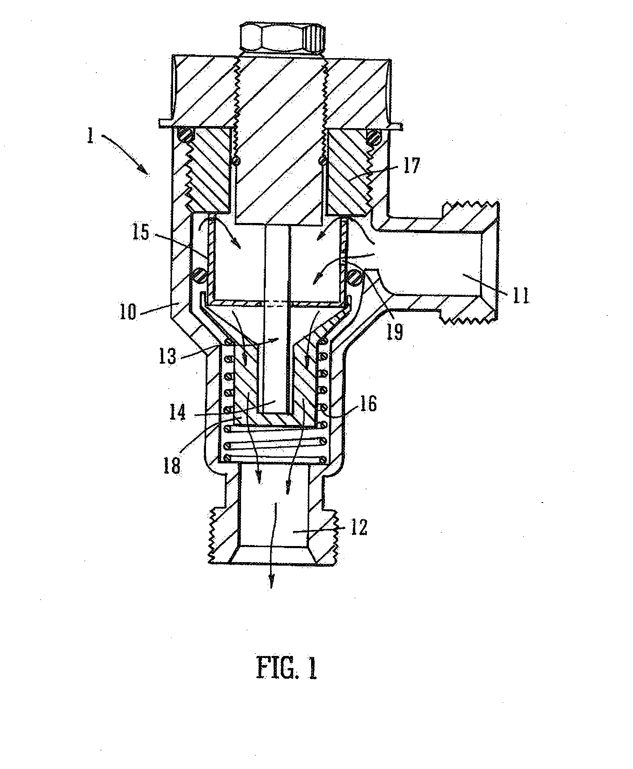

Referring firstly to figure 1, a thermostatic valve 1 is shown, having a valve body 10 having an inlet 11 and an outlet 12. The flow of water from the a heater/boiler enters the inlet 11 while water leaves from outlet 12 entering the domestic hot water system. The valve can be attached to the outlet pipe of a standard domestic combination/multipoint boiler or electric shower or other similar devices. For ease of explanation, the following description of operation will be in respect of combination boilers, but will be equally applicable to the other devices referred to above.

Within the valve body 10, a spring-biased thermostatic piston assembly 13, located within a guide tube 18, is positioned in the flow path. The thermostatic piston assembly 13 includes an actuator 14, and a cylindrical valve member 15, which, when cold, is biased by a spring 16, acting on the guide tube 18, into a sealing engagement with the valve headset 17. A tickle bore 19 is provided in the cylindrical valve member 15 proximate the inlet 11 to enable water to initially trickle flow through the piston assembly 13.

When a hot water tap is turned on, water will start to flow from the boiler through the bore 19 from the boiler to the tap. The bore is preferably a 2mm hole, but can be sized as required according to system requirements. Owing to the size of the bore 19, the water flow is reduced to approximately 2 litres per minute, which is sufficient to trip the mechanism to fire up the boiler. The temperature of the water flowing through the valve is cold initially, unless it had recently just been used. Within the boiler, a contained predetermined amount of water is heated, which indirectly heats the cold mains water passing through through the boiler to the tap via the thermostatic valve 1. Due to the restriction of the 2mm bore 19 in the valve member 15, the heat is not removed from the boiler as quickly as it would be the case if it were allowed to flow freely, unhindered to the tap as with convential arrangements. This flow restriction causes the boiler to warm up to its set operating temperature more quickly, using less gas and water. In some boilers tested, 50 degrees centigrade was achieved 40 seconds more quickly than previously.

As the cold water from the boiler starts to warm it passes through the bore 19 in the thermostatic piston assembly 13 passing over the actuator 14. The actuator 14, which typically may be a plastics material rod including a wax plug, or a copper rod, which expands, pushing against the variable headset 17 at one end, and the base of the guide tube 18 against the action of the spring 16. This causes the piston seal to lift, allowing the water to flow pass the seal up to the boilers operating flow rate. When the tap is turned off, the boiler will shut down and the thermostatic piston assembly 13 contracts as the temperature of the water around it decreases. The desired water temperature of the outlet can be adjusted and preset with the variable headset 20 by screwing it up or drown.

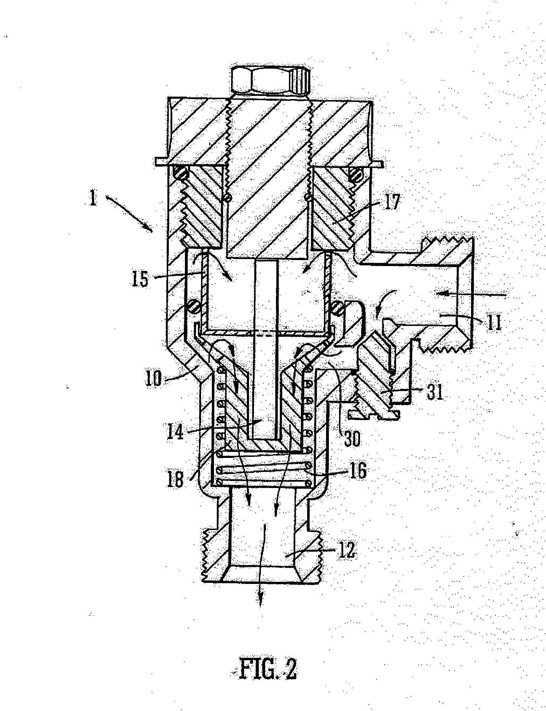

Figure 2 shows an alternative embodiment in which the trickle bore 19 is replaced by a bypass channel 30 provided in the valve body 10, where the flow of the cold water through channel 30 is controlled by an adjustable grub screw 31. This arrangement gives the device more range in circumstances when the mains pressures are too low to trip the boiler on, or too high, causing the flow to be fast, so that the boiler takes longer to reach operating temperature. By turning the grub screw in or out, it is possible to set the desired cold flow and it also eliminates the potential problem of lime scale build-up causing a blockage.

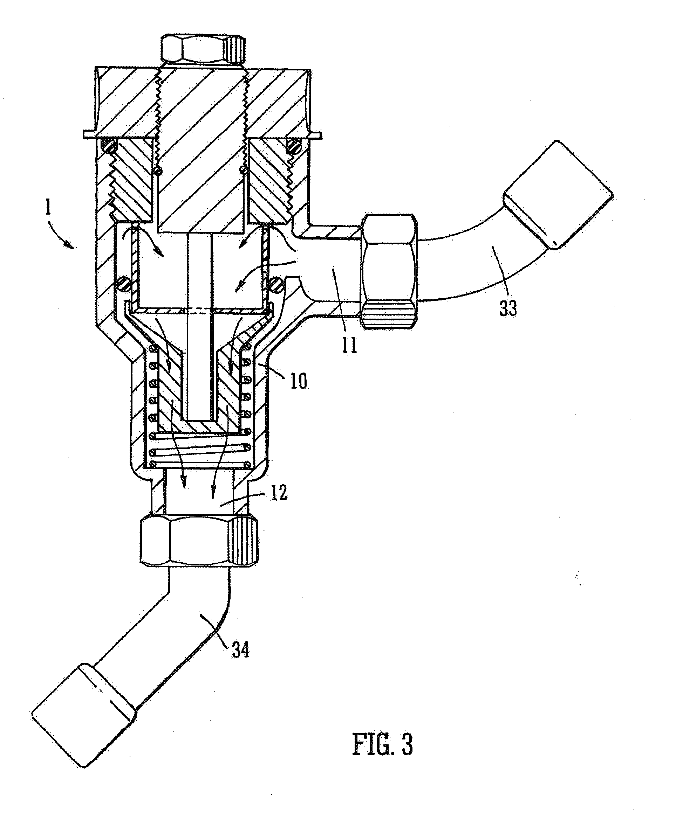

Figure 3 shows the valve 1 additionally having been altered to make it more user friendly. The inlet 11 includes an additional fitting 33 angled at 45°, whilst the outlet 12 also includes a swivel fitting 34 angled at 45°, which can rotate through 360°, so that the outlet can be inline or at right angles to the inlet. This would allow the valve 1 to be installed on a section of straight pipe or to be fitted on a right-angled section of pipe. The rotating outlet fitting could also be provided with locking lugs to hold the outlet at the required position

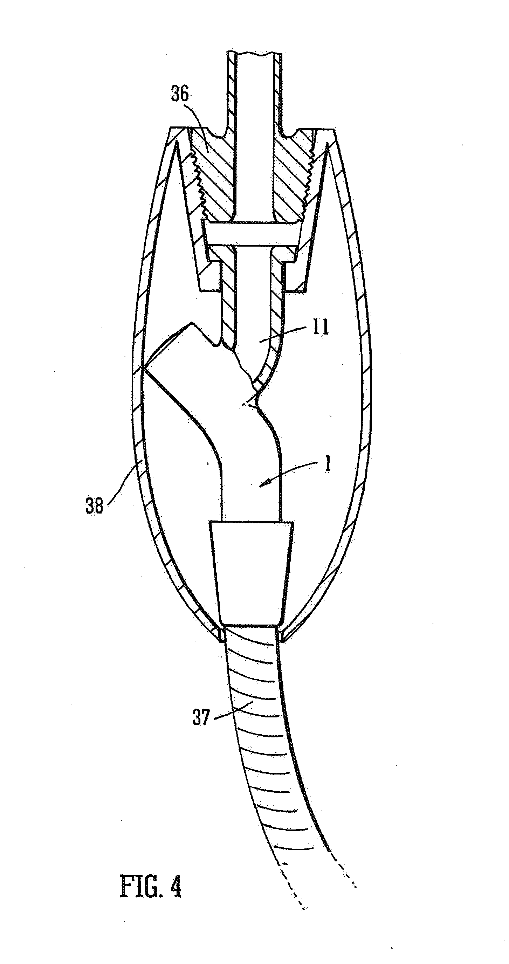

Figure 4 shows a redesigned low temperature valve 1 of the invention adapted to fit a electric shower water outlet 36. Working in the exact principle as the standard valve, but miniaturized as electric showers have a much lower water flow rate. This would be a DIY fit as it is designed to fit in-between the outlet and the shower hose 37. Although it could be produced in a chrome finish, it could be possible to dress it up with a plastic chrome replica clip on casing 38.

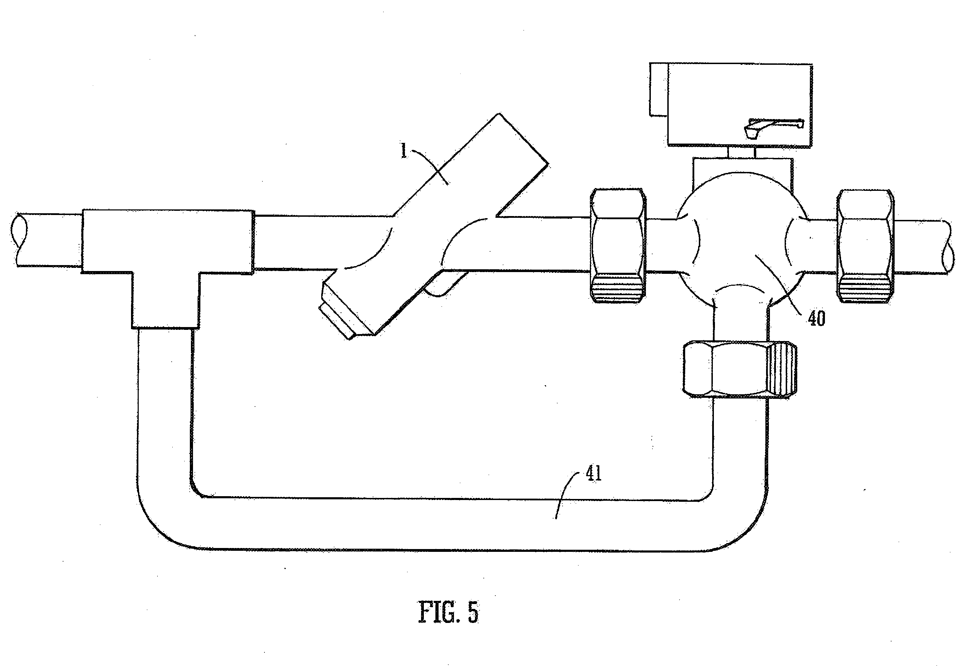

Figure 5 shows a valve 1 of the invention as it could be used, fitted inside a combination boilers during the manufacturing process. It shows it being fitted with an optional 3-port valve 40 acting as a control for the end user to use as a bypass via bypass 41, if for any reason that the end user wanted to run the boiler without the device operating. This gives the manufactures a choice to their customers such as they do with the comfort and eco modes fitted on many combination boilers.

## Claims

1. A valve (1) comprising a valve body (10) having a fluid inlet (11) and a fluid outlet (12) and having a thermostatic valve assembly (13) located in one of the flow path, from the fluid inlet (11) to the fluid outlet (12), wherein the thermostatic valve assembly (13) is supported in a guide tube (18) and is biased into a normal position, the thermostatic valve assembly (13) including an actuator member (14) and a valve member (15), which is displaced by the actuator member, as the temperature of the fluid entering the valve (1) increases, **characterised in that** there is only one flowv path, the normal position is a closed position, and there is a trickle bore (19), or a bypass channel (30) restricting flow of fluid through the valve until the fluid achieves a predetermined operating temperature.

2. A valve as claimed in claim 1, wherein the actuator member (14) comprises a plastics material rod including a temperature-sensitive wax plug.

3. A valve as claimed in claim 1, wherein the actuator member (14) comprises a copper rod.

4. A valve as claimed in claim 1, 2, or 3, in which the trickle bore (19) is provided in the valve member (15), extending from adjacent the fluid inlet (11) into the interior of the thermostatic valve assembly (13).

5. A valve as claimed in claim 1, 2 or 3, in which the bypass channel (30) is provided in the valve body (10), extending from the region of the fluid inlet (11) to the region of the guide tube (18) downstream of the thermostatic valve assembly and is adjustable by means of a grub screw adjuster.

6. A valve as claimed in any preceding claim, in which the operating temperature of the thermostatic valve assembly is adjustable by means of a variable valve headset (20).

7. A valve as claimed in any preceding claim in which the fluid inlet (11) includes an angled connector (33).

8. A valve as claimed in claim 7, in which the angled connector (33) of the inlet (11) is angled at 45°.

9. A valve as claimed in any preceding claim, in which the fluid outlet (12) includes an angled connector (34).

10. A valve as claimed in claim 9, in which the angled connector (34) of the outlet (12) is angled at 45°.

11. A valve as claimed in claim 9 or 10, in which the angled connector (34) of the outlet (12) is swivel- mounted so that such can rotate through 360° on said outlet (12).

## Patentansprüche

1. Ventil (1), umfassend einen Ventilkörper (10) mit einem Fluideinlass (11) und einem Fluidauslass (12) und mit einer thermostatischen Ventilanordnung (13), die sich in einem der Strömungswege, vom Fluideinlass (11) zum Fluidauslass (12), befindet, wobei die thermostatische Ventilanordnung (13) in einem Führungsrohr (18) gelagert und in einer normalen Position vorgespannt ist, wobei die thermostatische Ventilanordnung (13) ein Betätigungselement (14) und ein Ventilelement (15) einschließt, das durch das Betätigungselement verlagert wird, wenn die Temperatur des in das Ventil (1) eintretenden Fluids ansteigt, **dadurch gekennzeichnet, dass** es nur einen Strömungsweg gibt, die normale Position eine geschlossene Position ist und dass es eine Rinnsalbohrung (19) oder einen Umgehungskanal (30) gibt, der die Strömung von Fluid durch das Ventil begrenzt, bis das Fluid eine vorgegebene Betriebstemperatur erreicht.

2. Ventil nach Anspruch 1, wobei das Betätigungselement (14) eine Stange aus Kunststoffmaterial einschließlich eines temperaturempfindlichen Wachspfropfens umfasst.

3. Ventil nach Anspruch 1, wobei das Betätigungselement (14) eine Kupferstange umfasst.

4. Ventil nach Anspruch 1, 2 oder 3, wobei die Rinnsalbohrung (19) in dem Ventilelement (15) vorgesehen ist und sich von neben dem Fluideinlass (11) in das Innere der thermostatischen Ventilanordnung (13) erstreckt.

5. Ventil nach Anspruch 1, 2 oder 3, wobei der Umgehungskanal (30) in dem Ventilkörper (10) vorgesehen ist und sich von dem Bereich des Fluideinlasses (11) zum Bereich des Führungsrohrs (18) stromabwärts der thermostatischen Ventilanordnung erstreckt und mittels einer Gewindestifteinstellvorrichtung verstellbar ist.

6. Ventil nach irgendeinem vorhergehenden Anspruch, wobei die Betriebstemperatur der thermostatischen Ventilanordnung mittels eines variablen Ventillenkkopfs (20) verstellbar ist.

7. Ventil nach irgendeinem vorhergehenden Anspruch, wobei der Fluideinlass (11) einen angewinkelten Anschluss (33) einschließt.

8. Ventil nach Anspruch 7, wobei der angewinkelte Anschluss (33) des Einlasses (11) in einem Winkel von 45° angewinkelt ist.

9. Ventil nach irgendeinem vorhergehenden Anspruch, wobei der Fluidauslass (12) einen angewinkelten Anschluss (34) einschließt.

10. Ventil nach Anspruch 9, wobei der angewinkelte Anschluss (34) des Auslasses (12) in einem Winkel von 45° angewinkelt ist.

11. Ventil nach Anspruch 9 oder 10, wobei der angewinkelte Anschluss (34) des Auslasses (12) schwenkbar befestigt ist, so dass dieser sich um 360° auf dem Auslass (12) drehen kann.

## Revendications

1. Vanne (1) comprenant un corps de vanne (10) comportant une entrée de fluide (11) et une sortie de fluide (12) et comportant un ensemble de vanne thermostatique (13) situé dans un circuit d'écoulement allant de l'entrée de fluide (11) à la sortie de fluide (12), l'ensemble de vanne thermostatique (13) étant soutenu dans un tube de guidage (18) et étant sollicité dans une position normale, l'ensemble de vanne thermostatique (13) comprenant un élément actionneur (14) et un élément de vanne (15) déplacé par l'élément actionneur lorsque la température du fluide qui entre dans la vanne (1) augmente, **caractérisée en ce qu'**elle ne comprend qu'un seul circuit d'écoulement, **en ce que** la position normale est la position fermée, et **en ce qu'**elle comprend un alésage de type goutte-à-goutte (19) ou un canal de déviation (30) limitant l'écoulement de fluide dans la vanne jusqu'à ce que le fluide atteigne une température de service prédéterminée.

2. Vanne selon la revendication 1, dans laquelle l'élément actionneur (14) comprend une tige en matière plastique comportant un bouchon de cire sensible à la température.

3. Vanne selon la revendication 1, dans laquelle l'élément actionneur (14) comprend une tige en cuivre.

4. Vanne selon la revendication 1, 2 ou 3, dans laquelle l'alésage de type goutte-à-goutte (19) est prévu sur l'élément de vanne (15) allant d'à côté de l'entrée de fluide (11) à l'intérieur de l'ensemble de vanne thermostatique (13).

5. Vanne selon la revendication 1, 2 ou 3, dans laquelle le canal de déviation (30) est prévu dans le corps de vanne (10), allant de la région de l'entrée de fluide (11) à la région du tube de guidage (18) en aval de l'ensemble de vanne thermostatique, et est réglable au moyen d'un dispositif de réglage à vis sans tête.

6. Vanne selon l'une quelconque des revendications précédentes, dans laquelle la température de service de l'ensemble de vanne thermostatique est réglable au moyen d'un ensemble de tête de vanne variable (20).

7. Vanne selon l'une quelconque des revendications précédentes, dans laquelle l'entrée de fluide (11) comprend un connecteur incliné (33).

8. Vanne selon la revendication 7, dans laquelle le connecteur incliné (33) de l'entrée (11) est incliné à 45°.

9. Vanne selon l'une quelconque des revendications précédentes, dans laquelle la sortie de fluide (12) comprend un connecteur incliné (34).

10. Vanne selon la revendication 9, dans laquelle le connecteur incliné (34) de la sortie (12) est incliné à 45°.

11. Vanne selon la revendication 9 ou 10, dans laquelle les connecteurs inclinés de la sortie (12) sont montés sur un pivot de manière à pouvoir pivoter à 360° sur ladite sortie (12).
